(19) Europäisches Patentamt

European Patent Office

Office européen des brevets

(11) **EP 3 188 399 B1**

(12) **FASCICULE DE BREVET EUROPEEN**

(45) Date de publication et mention de la délivrance du brevet:
**21.03.2018 Bulletin 2018/12**

(51) Int Cl.:
***H04L 5/14*** *(2006.01)*     ***H04B 1/56*** *(2006.01)*
*H04B 1/525* *(2015.01)*

(21) Numéro de dépôt: **17150052.3**

(22) Date de dépôt: **02.01.2017**

(54) **ÉMETTEUR RÉCEPTEUR IBFD À MODULE DE TRANSPOSITION DE FRÉQUENCE NON RÉCIPROQUE**

VOLLDUPLEX-SENDER/-EMPFÄNGER MIT EINEM MODUL FÜR DIE NICHT REZIPROKE FREQUENZTRANSPOSITION

IBFD TRANSCEIVER MODULE WITH NON-RECIPROCAL FREQUENCY TRANSPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650011**

(43) Date de publication de la demande:
**05.07.2017 Bulletin 2017/27**

(73) Titulaire: **Commissariat à l'Energie Atomique et aux Energies Alternatives
75015 Paris (FR)**

(72) Inventeurs:
• **ROSSON, Patrick
  38330 Biviers (FR)**
• **CLEMENTE, Antonio
  38180 Seyssins (FR)**
• **DASSONVILLE, David
  38000 Grenoble (FR)**

(74) Mandataire: **Brevalex
  56, Boulevard de l'Embouchure
  B.P. 27519
  31075 Toulouse Cedex 2 (FR)**

(56) Documents cités:
**WO-A2-2015/021481     US-A1- 2015 333 847**

## Description

## DOMAINE TECHNIQUE

La présente invention concerne de manière générale le domaine des systèmes de communication de type IBFD (*In-Band Full-Duplex*) autrement dit pour des systèmes utilisant simultanément une même bande de fréquence en émission et en réception. La présente invention s'applique aussi bien aux communications filaires qu'aux communications sans fil.

## ÉTAT DE LA TECHNIQUE ANTÉRIEURE

La rareté des ressources spectrales a récemment suscité un nouvel intérêt pour les communications IBFD (*In-Band Full-Duplex*). A la différence des communications full-duplex FDD (*Frequency Division Duplexing*) faisant appel à des bandes de fréquence disjointes à l'émission et à la réception, les communications IBFD utilisent une même bande de fréquence simultanément en émission et en réception.

On trouvera une description générale des systèmes de communication IBFD dans l'article de A. Sabharval et al. intitulé « In-Band Full-Duplex wireless : challenges and opportunities » publié dans IEEE Journal on Selected Areas in Communications, Vol. 32, N° 9, Sept. 2014, pp. 1637-1652.

En contrepartie du gain en efficacité spectrale, les systèmes de communication IBFD souffrent toutefois d'un niveau élevé d'auto-interférence (*self-interference*). Cette interférence est essentiellement due aux fuites du circulateur entre les voies d'émission et de réception (défaut d'isolation du circulateur), à la désadaptation de l'antenne (réflexion du signal de l'antenne vers le circulateur) ainsi qu'à la réflexion du signal émis sur l'environnement de l'antenne. Le problème du niveau d'auto-interférence est d'autant plus sensible que le niveau de signal reçu est plus faible.

Une solution connue pour réduire le niveau d'auto-interférence dans un émetteur/récepteur IBFD est d'utiliser une annulation d'écho. Celle-ci consiste à estimer, généralement de manière adaptative, le signal interférent sur la voie de réception à partir du signal émis. Un certain nombre d'architectures d'émetteur/récepteur avec annulation d'écho en mode numérique et/ou analogique ont été proposées dans la littérature. On trouvera notamment une description d'un émetteur/récepteur faisant appel à une annulation d'écho hybride analogique/ numérique dans l'article de D. Bharadia et al. intitulé « Full Duplex Radios » publié dans Proc. of SIGCOMM'13, Hong Kong, Août 2013.

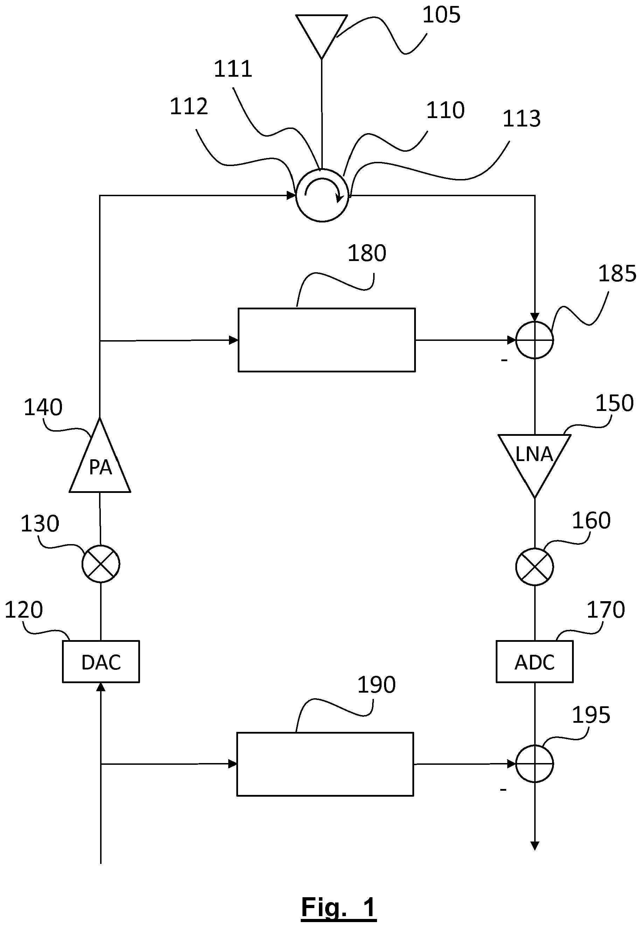

La structure de cet émetteur/récepteur est rappelée en Fig. 1. Celui-ci comprend un circulateur 110 comprenant un port commun 111 connecté à une antenne d'émission/ réception 105, un port 112 d'entrée connecté à la voie d'émission et un port de sortie 113 connecté à la voie de réception. La voie d'émission comprend un convertisseur numérique/analogique 120 pour fournir le signal en bande de base, un mélangeur 130 destiné à transposer le signal en bande RF et un amplificateur de puissance, 140, fournissant le signal RF amplifié au port 112 du circulateur. La voie de réception comprend un amplificateur faible bruit 150 recevant le signal d'antenne, un mélangeur 160 pour ramener le signal RF en bande de base, et un convertisseur analogique/numérique 170 pour convertir ce signal sous forme numérique.

Un premier annulateur d'écho opère au niveau de l'étage RF, sur le signal analogique. Cet annulateur d'écho comprend un filtre adaptatif, 180, qui estime l'interférence due au signal d'émission. L'interférence est ensuite soustraite du signal RF reçu en 185 à l'entrée de l'amplificateur faible bruit 150.

Un second annulateur d'écho opère en bande de base sur le signal numérique. Il comprend un filtre numérique, 190, qui estime l'interférence résiduelle due au signal d'émission. Cette interférence résiduelle est soustraite en 185 du signal reçu, ramené en bande de base. En éliminant la majeure partie de l'auto-interférence, le premier annulateur d'écho permet de réduire la dynamique d'entrée nécessaire du convertisseur analogique/ numérique 170.

Bien que les performances d'un tel émetteur/ récepteur soient satisfaisantes en termes d'isolation des voies d'émission et de réception (110 dB sur 80 MHz de bande passante à 2,4 GHz), elles sont obtenues au prix d'une architecture relativement complexe.

Une autre solution pour réduire l'auto-interférence dans un émetteur/ récepteur IBFD consiste à utiliser une structure antennaire à plusieurs éléments séparés spatialement, ou à exploiter la diversité de polarisation en émission et en réception. Cette solution conduit à une structure d'antenne plus complexe et à des diagrammes d'antenne différents en émission et en réception.

La demande de brevet US-A-2015/0333847 décrit un émetteur/récepteur utilisant une même bande de fréquence pour émettre un signal d'émission et recevoir un signal de réception, l'émetteur/récepteur comprenant un module de transposition en fréquence bidirectionnel.

Le but de la présente invention est par conséquent de remédier au moins pour partie aux inconvénients précités, en particulier de proposer un émetteur/récepteur in-band full-duplex de structure simple tout en permettant d'obtenir un bon niveau d'isolation entre les voies d'émission et de réception.

## EXPOSÉ DE L'INVENTION

La présente invention est définie par un émetteur/récepteur utilisant une même bande de fréquence pour simultanément émettre un signal d'émission $\left( S_{TX}^{out} \right)$ et recevoir un signal de réception $\left( S_{RX}^{in} \right)$, l'émetteur/récepteur comprenant :

un duplexeur comportant un port d'entrée recevant un signal à émettre $(S_{TX}^{in})$, un port de sortie fournissant un signal reçu $(S_{RX}^{out})$ ainsi qu'un port commun;

un module de transposition en fréquence bidirectionnel, comprenant une première entrée/sortie reliée au port commun du duplexeur ainsi qu'une seconde entrée/sortie recevant ledit signal de réception $(S_{RX}^{in})$ et fournissant ledit signal d'émission $(S_{TX}^{out})$, ledit module de transposition en fréquence étant adapté à transposer d'un écart en fréquence prédéterminé, $\Delta F$, le signal à émettre $(S_{TX}^{in})$ pour obtenir le signal d'émission $(S_{TX}^{out})$, et à transposer du même écart en fréquence, le signal de réception $(S_{RX}^{in})$ pour obtenir le signal reçu $(S_{RX}^{out})$, la bande de fréquence du signal à émettre et la bande de fréquence du signal reçu étant ainsi séparées d'un écart en fréquence double dudit écart en fréquence prédéterminé, l'écart de fréquence prédéterminé $\Delta F$ étant choisi tel que $\Delta F > (B_{TX} + B_{RX})/4$ où $B_{TX}$ est la bande du signal d'émission et $B_{RX}$ est la bande du signal de réception.

Avantageusement, le module de transposition de fréquence comprend une première branche, dite branche en phase et une seconde branche, dite branche en quadrature, arrangées en parallèle entre la première entrée/sortie et la seconde entrée/sortie, la branche en phase comprenant un premier mélangeur bidirectionnel avec un premier signal d'oscillateur local à la fréquence $\Delta F$, la branche en quadrature comprenant un filtre de Hilbert et un second mélangeur bidirectionnel avec un second signal d'oscillateur local à la fréquence $\Delta F$, en avance de 90° par rapport au premier signal d'oscillateur local.

Les premier et second signaux d'oscillateur local peuvent être des signaux d'horloge carrée, auquel cas les premier et second mélangeurs bidirectionnels sont chacun réalisés sous la forme d'un commutateur qui, alternativement, court-circuite et applique un déphasage de 180° entre ses bornes.

L'émetteur/récepteur peut en outre comporter un premier diviseur/combineur de puissance comprenant une première borne commune reliée à la première entrée/sortie pour recevoir un signal à diviser ou fournir un signal combiné, et deux bornes pour fournir chacune un signal divisé ou recevoir un signal à combiner, une première borne du premier diviseur/combineur de puissance étant reliée à la branche en phase et une seconde borne du premier diviseur/combineur de puissance étant reliée à la branche en quadrature.

L'émetteur/ récepteur peut comporter en outre un second diviseur/combineur de puissance comprenant une seconde borne commune reliée à la seconde entrée/sortie pour recevoir un signal à diviser ou fournir un signal combiné, et deux bornes pour fournir chacune un signal divisé ou recevoir un signal à combiner, une première borne du second diviseur/combineur de puissance étant reliée à la branche en phase et une seconde borne du second diviseur/combineur de puissance étant reliée à la branche en quadrature.

Le filtre de Hilbert peut être réalisé par exemple au moyen d'un coupleur hybride en quadrature.

La seconde entrée/sortie du module de transposition de fréquence est avantageusement reliée à une antenne d'émission/réception.

Selon un mode de réalisation particulier, le port d'entrée du duplexeur est relié à une première antenne élémentaire de réception et le port de sortie du duplexeur est relié à une première antenne élémentaire d'émission, ladite première antenne élémentaire d'émission et ladite première antenne élémentaire de réception étant disposées toutes deux sur une première face d'un substrat isolant.

L'émetteur/récepteur peut comprendre en outre un second duplexeur ayant un port commun relié à la seconde entrée/sortie du module de transposition de fréquence, un port de sortie relié à une seconde antenne élémentaire en émission et un port d'entrée relié à une seconde antenne élémentaire en réception, la seconde antenne élémentaire en émission et la seconde antenne élémentaire en réception étant disposées sur une seconde face du substrat, opposée à ladite première face.

L'émetteur/récepteur peut comprendre un déphaseur pilotable entre la seconde entrée/sortie du module de transposition de fréquence et le port commun du second duplexeur.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1, déjà décrite, représente schématiquement un émetteur récepteur IBFD avec annulation d'écho connu de l'état de la technique ;
La Fig. 2 représente schématiquement un émetteur/récepteur IBFD selon un premier mode de réalisation de l'invention ;
La Fig. 3A représente schématiquement un exemple de module de transposition non-réciproque de fréquence fonctionnant en mode d'émission ;
La Fig. 3B représente schématiquement un exemple de module de transposition non-réciproque de fréquence fonctionnant en mode de réception ;
La Fig. 4 représente un coupleur hybride en quadrature utile pour réaliser un filtre de Hilbert dans le module de transposition non-réciproque de fréquence des Figs. 3A et 3B;

La Fig. 5 représente schématiquement un émetteur/récepteur selon un second mode de réalisation utile à la bonne compréhension de l'invention ;

La Fig. 6 représente schématiquement un émetteur/récepteur selon une variante de la Fig. 5 ;

Les Fig. 7A et 7B représentent en vue de profil et en vue arrière un réseau d'antennes biface à commande de phase utilisant une pluralité d'émetteurs/ récepteurs selon un exemple de réalisation de l'invention;

La Fig. 8 représente un premier exemple de réalisation d'un émetteur/ récepteur utilisé dans les Fig. 7A et 7B ;

La Fig. 9 représente un second exemple de réalisation d'un émetteur/ récepteur utilisé dans les Fig. 7A et 7B.

## EXPOSÉ DÉTAILLÉ DE MODES DE RÉALISATION PARTICULIERS

Nous considérerons dans la suite un émetteur/ récepteur de type IBFD comme défini dans la partie introductive. Cet émetteur/récepteur pourra émettre et recevoir sur un canal filaire ou non filaire. En particulier, il pourra équiper une station de base, un terminal mobile ou un relais.

L'idée à la base de la présente invention est d'utiliser un module bidirectionnel de transposition non-réciproque de fréquence entre le canal de propagation et le duplexeur chargé de séparer les voies d'émission et de réception.

On entend par module de transposition de fréquence bidirectionnel un module capable de transposer (ou de manière équivalente de translater) la fréquence d'un signal à émettre pour fournir un signal d'émission décalé en fréquence de $\Delta F_{TX}$ par rapport à ce dernier, et, inversement, de transposer en fréquence un signal de réception pour fournir un signal reçu décalé en fréquence de $\Delta F_{RX}$ par rapport à ce dernier. Dans le cas d'une transmission non filaire les signaux d'émission et de réception sont des signaux d'antenne, le signal à émettre et le signal reçu sont ceux respectivement sur le port d'entrée et le port de sortie du duplexeur.

On entend par module de transposition réciproque de fréquence, un module de transposition effectuant un décalage en fréquence $\Delta F_{TX}$ sur la voie d'émission et un décalage en fréquence $\Delta F_{RX} = -\Delta F_{TX}$ sur la voie de réception. Ainsi, un signal à transmettre ayant une bande de fréquence donnée qui traverserait ledit module sur la voie d'émission et qui serait réfléchi, traverserait à nouveau ce même module sur la voie de réception et occuperait alors sensiblement la même bande de fréquence que celle du signal à transmettre.

A l'inverse, on entend par module de transposition non-réciproque de fréquence un module de transposition effectuant un décalage en fréquence $\Delta F_{TX}$ sur

la voie d'émission et un même décalage en fréquence $\Delta F_{RX} = \Delta F_{TX} = \Delta F$ sur la voie de réception. Ainsi, un signal à transmettre qui traverserait le module sur la voie d'émission et serait réfléchi, traverserait à nouveau ce même module sur la voie de réception et occuperait alors une bande de fréquence décalé de $2\Delta F$ par rapport à la bande du signal à transmettre.

On comprendra que le module de transposition est non réciproque au sens où la fonction qu'il réalise n'est pas réciproque. En d'autres termes, si l'on note $h_{Tx}$ la fonction du module dans le sens de la transmission et $h_{Rx}$ la fonction du module dans le sens de la réception, on a $h_{Rx} \circ h_{Tx} \neq Id$ où $Id$ est la fonction identité.

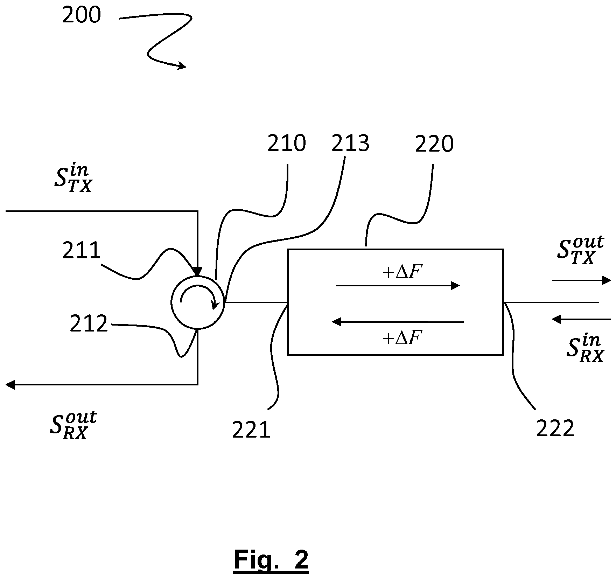

La Fig. 2 représente schématiquement un émetteur/récepteur IBFD selon un premier mode de réalisation de l'invention.

L'émetteur/récepteur comprend un duplexeur, 210, comportant un port d'entrée, 211, recevant un signal à émettre, $S_{TX}^{in}$, un port de sortie, 212, fournissant un signal reçu, $S_{RX}^{out}$, et un port commun, 213. Le duplexeur peut être réalisé sous la forme d'un circulateur de manière connue en soi. On rappelle que, dans un duplexeur, le signal sur le port d'entrée est transmis sur le port commun et que le signal arrivant sur le port commun est transmis au port de sortie.

Le port commun du duplexeur est relié à une première entrée/sortie, 221, d'un module bidirectionnel de transposition non réciproque de fréquence, 220. Ainsi, ce module de transposition de fréquence reçoit sur sa première entrée/sortie le signal à transmettre, $S_{TX}^{in}$, et fournit sur cette même entrée/sortie le signal reçu $S_{RX}^{out}$. Ce module de transposition comprend en outre une seconde entrée/sortie, 222, recevant ledit signal de réception, $S_{RX}^{in}$ et fournissant le signal d'émission, $S_{TX}^{out}$. Dans le cas d'un système de communication sans fil, la seconde entrée/sortie peut être directement reliée à l'antenne. On remarquera qu'avec les conventions de notation précédentes $S_{TX}^{out} = h_{Tx}\left(S_{TX}^{in}\right)$ et $S_{RX}^{out} = h_{Rx}\left(S_{RX}^{in}\right)$.

Comme on l'a vu plus haut, le module de transposition de fréquence est adapté à transposer d'un écart en fréquence prédéterminé, $\Delta F$, le signal à émettre, $S_{TX}^{in}$, pour obtenir le signal d'émission, $S_{TX}^{out}$, et à transposer du même écart en fréquence, le signal de réception, $S_{RX}^{in}$, pour obtenir le signal reçu, $S_{RX}^{out}$, la bande de fréquence du signal à émettre et la bande de fréquence du signal reçu étant ainsi séparées d'un écart en fréquence double dudit écart en fréquence prédéterminé.

L'écart de fréquence Δ*F* est avantageusement choisi tel que Δ*F* > *B*/2 où *B* est la bande du signal d'émission et du signal de réception. Si les bandes de ces signaux sont différentes, on choisira Δ*F* > ($B_{TX}$ + $B_{RX}$) / 4 où $B_{TX}$ est la bande du signal d'émission et $B_{RX}$ est la bande du signal de réception. Dans le cas où cette condition n'est pas vérifiée, la séparation fréquentielle des bandes d'émission et de réception est imparfaite et l'on pourra adopter un second mode de réalisation décrit plus loin.

On comprend que, vu des ports 211 et 212 du duplexeur, l'émetteur/récepteur se comporte comme un dispositif de communication full-duplex FDD et qu'à l'inverse, vu de l'entrée/sortie 222 du module de transposition de fréquence, celui-ci se comporte comme un dispositif de communication IBFD. L'émetteur/récepteur présente ainsi à la fois les avantages d'une communication FDD, à savoir un faible niveau d'auto-interférence en raison de la séparation fréquentielle des bandes d'émission et de réception, et les avantages d'une communication IBFD, à savoir la faible occupation spectrale.

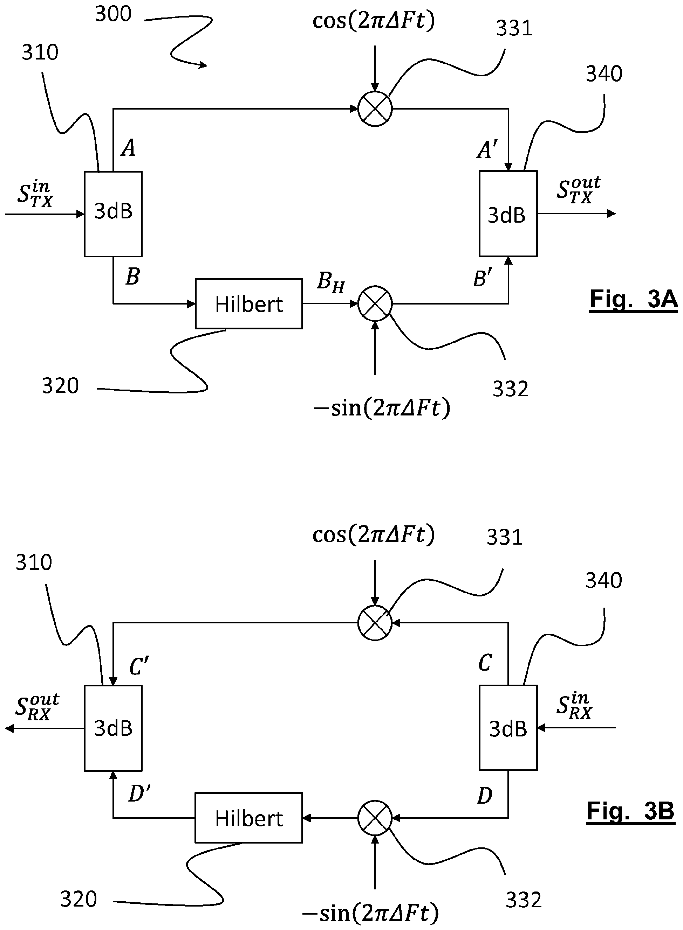

La Fig. 3A représente schématiquement un exemple de module de transposition non-réciproque de fréquence, fonctionnant en émission.

Le module de transposition de fréquence 300 comprend un premier diviseur/combineur de puissance bidirectionnel (2-way power splitter/combiner), 310, divisant le signal à émettre $S_{TX}^{in}$ en deux signaux *A* et *B* de même amplitude $\frac{\sqrt{2}}{2} S_{TX}^{in}$ (en raison de la conservation de la puissance) et de même phase.

Le signal *A* est multiplié dans un premier mélangeur bidirectionnel 331 avec la fonction cos(2π Δ*Ft*).

Le signal *B* est fourni à un filtre de Hilbert bidirectionnel, 320, et le signal ainsi filtré, $B_H$, est multiplié avec la fonction -sin(2π Δ*Ft*) dans un second mélangeur bidirectionnel 332. On notera que le filtre de Hilbert et le mélangeur bidirectionnel 332 peuvent être intervertis (sous réserve que la bande de validité du filtre en question couvre le spectre avant et après transposition). Un exemple de réalisation de filtre de Hilbert bidirectionnel sera décrit plus loin. On rappelle ici qu'un filtre de Hilbert a pour fonction de transfert idéale *H*(*f*) = -*j*sgn(*f*) où sgn(.) est la fonction signe valant, -1 si l'argument est négatif, +1 si l'argument est positif et 0 si l'argument est nul. En pratique, le filtre de Hilbert n'est réalisé que sur une bande de validité prédéterminée incluant celle du signal le traversant. On rappelle que la transformée de Hilbert d'un signal réel est également réelle.

Un exemple de mélangeur bidirectionnel est décrit dans le document US-B-8036627 inclus ici par référence.

Dans l'exemple illustré, on remarquera que le signal en entrée des mélangeurs 331 et 332 peut être considéré comme la représentation d'un signal analyti-que $\tilde{A}$ = *A* + *jB_H*. Les mélangeurs 331 et 332 fournissent deux composantes qui permettent de calculer la partie réelle du signal complexe $\tilde{A}e^{j2\pi\Delta Ft}$, c'est-à-dire un signal transposé en fréquence de Δ*F*.

Les signaux *A'* et *B'* en sortie respectivement des mélangeurs 331 et 332 sont ensuite combinés dans un second diviseur/combineur de puissance 340, de structure identique à celle du premier diviseur/combineur de puissance 310. Le signal d'émission en sortie du second diviseur/combineur de puissance 340 a donc pour

$$S_{TX}^{out} = \frac{\sqrt{2}}{2}(A' + B') \, .$$

amplitude                    Ce signal d'émission est ensuite transmis sur le canal de propagation sans fil ou filaire.

La Fig. 3B représente schématiquement un exemple de module de transposition non-réciproque de fréquence, fonctionnant en réception.

Le signal de réception $S_{RX}^{in}$ est divisé dans le second diviseur/combineur de puissance 340 en deux signaux identiques *C* et *D* de même amplitude $\frac{\sqrt{2}}{2} S_{RX}^{in}$ (en raison de la conservation de puissance) et de même phase. Le signal *C* est multiplié dans le premier mélangeur bidirectionnel 331 avec la fonction cos(2π Δ*Ft*).

Le signal *D* est multiplié avec la fonction -sin(2π Δ*Ft*) dans le second mélangeur bidirectionnel 332, puis fourni au filtre de Hilbert bidirectionnel, 320.

Le signal en entrée des mélangeurs 331 et 332 peut être considéré comme la représentation d'un signal complexe $\tilde{C}$ = *C* + *jD*. Les mélangeurs 331 et 332 fournissent un signal complexe $\tilde{C}e^{j2\pi\Delta Ft}$, c'est-à-dire, là encore, un signal transposé en fréquence de +Δ*F*.

Les signaux *C'* et *D'* en sortie respectivement des mélangeurs 331 et 332 sont ensuite combinés dans le premier diviseur/combineur de puissance 310 pour

$$S_{RX}^{out} = \frac{\sqrt{2}}{2}(C' + D') \, .$$

donner le signal reçu

On a indiqué que les mélangeurs bidirectionnels 331 et 332 étaient adaptés à effectuer une multiplication avec les signaux cos(2π Δ*Ft*) et -sin(2π Δ*Ft*). Ces signaux peuvent être obtenus à partir d'un oscillateur local à la fréquence Δ*F* et un déphaseur de 90°. Alternativement, on pourra utiliser des signaux d'horloge carrés, à la même fréquence, en quadrature. Ils pourront alors être obtenus simplement à partir d'un signal d'horloge carré à la fréquence 2Δ*F*. L'utilisation de signaux carrés présente l'inconvénient de générer des harmoniques mais, en pratique, le caractère passe-bande des composants les élimine en grande partie. L'utilisation de signaux carrés permet en revanche de simplifier considérablement la réalisation des mélangeurs bidirectionnels. En effet, l'application d'états de phase +1 et -1 peut alors être simplement réalisée en commutant ou non le signal à mélanger sur une ligne à retard correspondant à un déphasage de 180° de la porteuse.

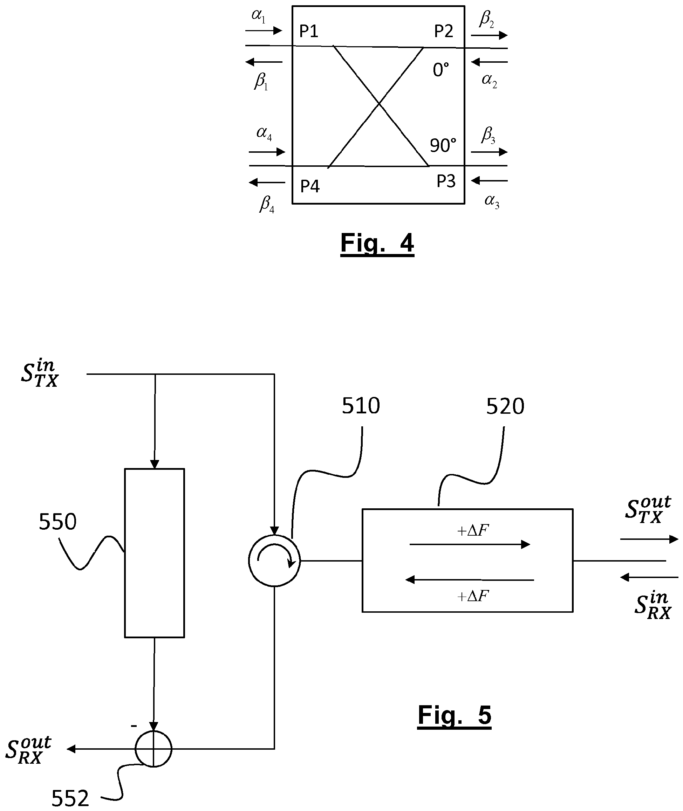

Le premier diviseur/combineur de puissance 310 ainsi que le filtre de Hilbert 320 pourront être réalisés au moyen d'un coupleur hybride en quadrature (*Quad Hybrid Coupler*) comme représenté en Fig. 4.

Un tel coupleur est un dispositif à quatre ports $P_1,...,P_4$. On note respectivement $\alpha_1,...,\alpha_4$ et $\beta_1,...,\beta_4$ les amplitudes complexes des signaux entrants et des signaux sortant relatifs aux ports $P_1,...,P_4$. Les vecteurs $\alpha = (\alpha_1\ \alpha_2\ \alpha_3\ \alpha_4)^T$ et $\beta = (\beta_1\ \beta_2\ \beta_3\ \beta_4)^T$ sont reliés par la matrice de paramètres S du coupleur :

$$\boldsymbol{\beta} = \mathbf{S}\boldsymbol{\alpha}$$

la matrice **S** ayant la forme suivante :

$$\mathbf{S} = \frac{1}{\sqrt{2}} \begin{pmatrix} 0 & 1 & j & 0 \\ 1 & 0 & 0 & j \\ j & 0 & 0 & 1 \\ 0 & j & 1 & 0 \end{pmatrix}$$

Le port $P_1$ est connecté à la première entrée/sortie du module de transposition de fréquence avec $\alpha_1 = S_{TX}^{in}$ et $\beta_1 = S_{RX}^{out}$, le port $P_2$ est connecté au premier mélangeur bidirectionnel, le port $P_3$ est connecté au second mélangeur bidirectionnel et le port $P_4$ est relié à une impédance adaptée.

La Fig. 5 représente schématiquement un second mode de réalisation ne faisant pas partie de la présente invention.

Les références 510 et 520 désignent les mêmes éléments que les éléments 210 et 220 de la Fig. 2. Toutefois, l'émetteur/récepteur de la Fig. 1 se distingue de celui représenté en Fig. 2 par la présence d'un annulateur d'écho 550 disposé entre les ports d'entrée et de sortie du duplexeur 510. Plus précisément, un filtre 550 reçoit en entrée le signal à émettre $S_{TX}^{in}$ et fournit en sortie une estimation de l'auto-interférence. L'auto-interférence est soustraite en 552 du signal reçu $S_{RX}^{out}$. Ce mode de réalisation est plus complexe que le premier mais permet d'augmenter le taux de réjection de l'auto-interférence résiduelle. En particulier, lorsque la condition $\Delta F > (B_{TX} + B_{RX})/4$ n'est pas réalisée et que les bandes d'émission et de réception se recouvrent partiellement, on pourra mettre en oeuvre ce mode de réalisation pour éliminer l'auto-interférence résiduelle.

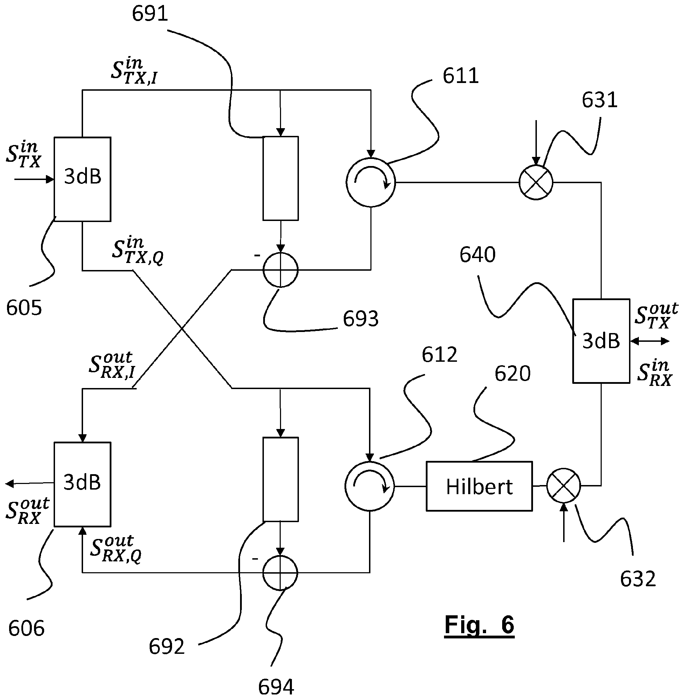

La Fig. 6 représente schématiquement un émetteur/récepteur selon une variante de la Fig. 5.

A la différence de la Fig. 5, l'émetteur/ récepteur selon cette variante comprend un annulateur d'écho sur chacune des branches en phase et en quadrature.

Plus précisément, le signal à émettre $S_{TX}^{in}$ est divisé en deux signaux de même amplitude dans un premier diviseur/combineur de puissance 605 pourfournir deux signaux $S_{TX,I}^{in}$ et $S_{TX,Q}^{in}$, le premier étant destiné à la branche en phase et le second à la branche en quadrature. De manière symétrique, les signaux $S_{RX,I}^{out}$ et $S_{RX,Q}^{out}$ issus respectivement des branches en phase et en quadrature sont combinés dans un troisième diviseur/combineur de puissance 606 pour former le signal reçu $S_{RX}^{out}$.

Un premier duplexeur, 611, est prévu sur la branche en phase de l'émetteur/récepteur. Il reçoit sur son port d'entrée le signal $S_{TX,I}^{in}$ et fournit sur son port de sortie le signal $S_{RX,I}^{out}$. Son port commun est relié au premier mélangeur bidirectionnel 631.

De manière similaire, un second duplexeur, 612, est prévu sur la branche en quadrature de l'émetteur/récepteur. Il reçoit sur son port d'entrée le signal $S_{TX,Q}^{in}$ et fournit sur son port de sortie le signal $S_{RX,Q}^{out}$. Son port commun est relié au second mélangeur bidirectionnel 632 après avoir traversé le filtre de Hilbert 620.

Les premier et second mélangeurs bidirectionnels sont par ailleurs reliés au diviseur/combineur de puissance 640 comme dans le premier mode de réalisation.

Un premier annulateur d'écho, 691, est prévu entre les voies d'émission et de réception de la branche en phase. Celui-ci reçoit en entrée le signal $S_{TX,I}^{in}$ et fournit une estimation de l'auto-interférence sur la branche en phase. Cette auto-interférence est soustraite en 693 au signal $S_{RX,I}^{out}$.

Un second annulateur d'écho, 692, est prévu entre les voies d'émission et de réception de la branche en quadrature. Celui-ci reçoit en entrée le signal $S_{TX,Q}^{in}$ et fournit une estimation de l'auto-interférence sur la branche en quadrature. Cette auto-interférence est soustraite en 694 au signal $S_{RX,Q}^{out}$.

Les premier et second annulateurs d'écho 691, 692 peuvent être implémentés en mode analogique ou en mode numérique ou encore selon une architecture hybride analogique/numérique comme décrit dans la partie introductive.

Les diviseurs/combineurs de puissance 605 et 606 peuvent être également réalisés en numérique auquel cas les signaux $S_{TX,I}^{in}$, $S_{TX,Q}^{in}$, $S_{RX,I}^{out}$, $S_{RX,Q}^{out}$ sont eux-mêmes numériques. Si l'on suppose que les mélangeurs 631, 632 et le filtre de Hilbert 620 sont dépourvus d'imperfection les mêmes échantillons numériques de $S_{TX}^{in}$ sont fournis aux entrées respectives des annulateurs d'écho 691 et 692. Le combineur de puissance 606 peut être également remplacé par un simple sommateur des échantillons numériques des signaux $S_{RX,I}^{out}$ et $S_{RX,Q}^{out}$. Cette seconde variante permet de réduire les pertes à 3dB au lieu de 6dB dans la première. En outre, cette architecture permet de compenser les erreurs de quadrature (en phase et en amplitude) dans les mélangeurs 631, 632 et le filtre de Hilbert 620. En effet, en cas d'imperfection RF, les échantillons $S_{TX,I}^{in}$, $S_{TX,Q}^{in}$ émis sur les voie en quadrature sont différents. Ils sont issus d'un filtrage qui compense au mieux les erreurs de phase et de gain des deux branches. En réception, les signaux $S_{RX,I}^{out}$ et $S_{RX,Q}^{out}$ sont également combinés par filtrage linéaire pour compenser au mieux ces erreurs. Ces filtrages peuvent être obtenus lors d'une phase de calibration par des techniques classiques.

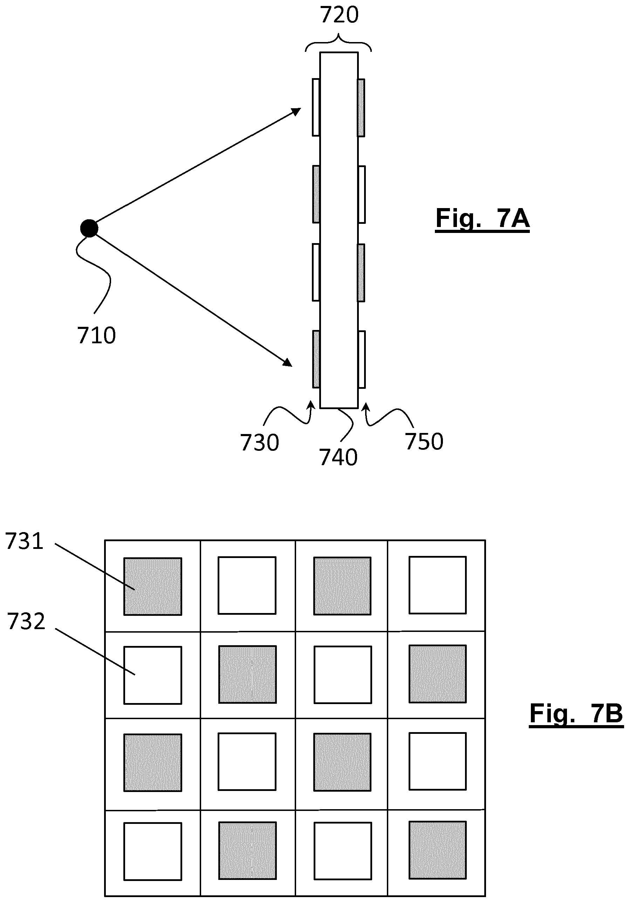

La Fig. 7A représente en vue de profil un réseau d'antennes biface à commande de phase utilisant une pluralité d'émetteurs/récepteurs selon un exemple de réalisation de l'invention.

Une source RF, 710, émet une onde en direction de la face arrière d'un réseau d'antennes biface, 720. Ce réseau d'antennes biface est composé d'un premier réseau planaire, 730, situé sur la face arrière d'un substrat 740, et d'un second réseau planaire, 750, situé sur la face avant de ce même substrat. Le substrat peut être composé de deux couches de substrat séparées par un plan de masse comme décrit dans la demande US-A-2013/0271346 incorporée ici par référence. Généralement, dans un tel réseau d'antennes biface (*transmitter array*) les antennes élémentaires du premier réseau et les antennes élémentaires du second réseau sont reliées par des déphaseurs élémentaires de sorte que l'onde reçue par une antenne élémentaire du premier réseau est déphasée par un déphaseur élémentaire avant d'être émise par l'antenne élémentaire correspondante du second réseau. Un tel réseau d'antennes biface permet d'orienter dynamiquement le faisceau d'émission/réception en pilotant les différents déphasages élémentaires ou de former un faisceau respectant un gabarit prédéfini.

Dans le cas présent, le premier réseau 730 est composé d'un premier sous-réseau 731 et d'un second sous-réseau 732 d'antennes élémentaires, les antennes élémentaires des premier et second sous-réseaux étant par exemple arrangées en quinconce comme illustré sur la Fig. 7B représentant la face arrière du réseau d'antennes biface 720. De manière symétrique, le second réseau 750 sur la face avant du substrat est composé d'un troisième sous-réseau et d'un quatrième sous-réseau d'antennes élémentaires arrangées en quinconce. Les premier et second sous-réseaux sont respectivement dédiés à la réception et à l'émission. De même, les troisième et quatrième sous-réseaux sont respectivement dédiés à l'émission et à la réception.

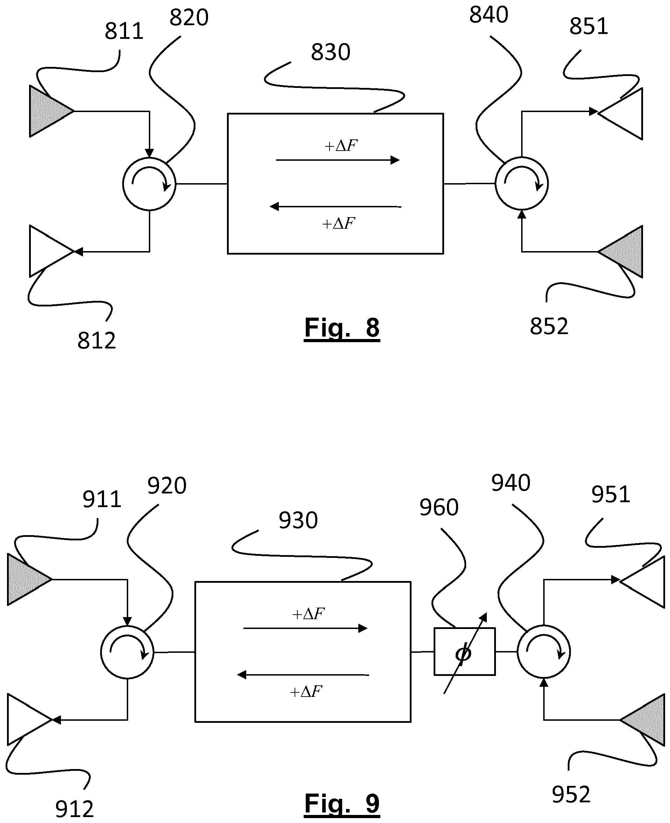

A la différence du réseau d'antennes biface connu de l'art antérieur, des émetteurs/récepteurs selon un exemple de réalisation de l'invention couplent les antennes élémentaires du premier réseau avec celles du second réseau comme illustré en Fig. 8.

On a représenté sur cette figure, une antenne élémentaire, 811, appartenant au premier sous-réseau et une antenne élémentaire voisine, 812, appartenant au second sous-réseau. Les antennes 811 et 812 sont respectivement reliées aux ports d'entrée et de sortie d'un premier duplexeur 820. Le port commun du duplexeur 820 est relié à la première entrée/sortie d'un module de transposition non-réciproque de fréquence 830 tel que décrit en relation avec la référence 220 de la Fig. 2. La seconde entrée/sortie du module de transposition non-réciproque en fréquence est reliée au port commun d'un second duplexeur 840. Son port de sortie est par ailleurs relié à une antenne élémentaire 851 du troisième sous-réseau et son port de sortie à une antenne élémentaire voisine, 852, du quatrième sous-réseau.

Ainsi, vu de la face arrière du réseau biface, la communication avec la source est de type FDD, la bande de fréquence de réception du sous-réseau 1 étant décalée de $2\Delta F$ de la bande de fréquence d'émission du sous-réseau 2. En revanche, vu de la face avant du réseau biface la communication est de type IBFD.

La Fig. 9 illustre un second exemple d'émetteur/récepteur pouvant être utilisé dans le réseau d'antennes biface des Figs. 7A et 7B.

Les éléments 911-952 représentés en Fig. 9 sont identiques aux éléments 811-852 de la Fig. 8. Cet exemple de réalisation se distingue en revanche du précédent en ce qu'il comprend en outre un déphaseur élémentaire contrôlable 960 entre la seconde entrée/sortie du module de transposition de fréquence 930 et le second duplexeur 940. Ainsi, en faisant varier convenablement les déphasages des différents déphaseurs élémentaires dans les émetteurs/récepteurs on peut pointer le faisceau de la communication IBFD dans la direction souhaitée. Le cas échéant, deux déphaseurs élémentaires pour chacune des voies d'émission et de réception pourront être prévus à la place du déphaseur élémentaire unique 960. Les faisceaux d'émission et de réception de la communication IBFD pourront alors être pointés indépendamment l'un de l'autre.

**Revendications**

1. Emetteur/récepteur utilisant une même bande de fréquence pour simultanément émettre un signal d'émission $\left( S_{TX}^{out} \right)$ et recevoir un signal de réception $\left( S_{RX}^{in} \right)$ comprenant:

un duplexeur (210) comportant un port d'entrée (211) recevant un signal à émettre $\left( S_{TX}^{in} \right)$, un port de sortie (212) fournissant un signal reçu $\left( S_{RX}^{out} \right)$ ainsi qu'un port commun (213);
un module de transposition en fréquence (220) bidirectionnel, **caractérisé en ce que** :
ledit module de transposition en fréquence comprend une première entrée/sortie (221) reliée au port commun du duplexeur ainsi qu'une seconde entrée/sortie (222) recevant ledit signal de réception $\left( S_{RX}^{in} \right)$ et fournissant ledit signal d'émission $\left( S_{TX}^{out} \right)$, ledit module de transposition en fréquence étant adapté à transposer d'un écart en fréquence prédéterminé, ΔF, le signal à émettre $\left( S_{TX}^{in} \right)$ pour obtenir le signal d'émission $\left( S_{TX}^{out} \right)$, et à transposer du même écart en fréquence, le signal de réception $\left( S_{RX}^{in} \right)$ pour obtenir le signal reçu $\left( S_{RX}^{out} \right)$, la bande de fréquence du signal à émettre et la bande de fréquence du signal reçu étant ainsi séparées d'un écart en fréquence double dudit écart en fréquence prédéterminé, l'écart de fréquence prédéterminé ΔF étant choisi tel que ΔF > ($B_{TX}$ + $B_{RX}$)/4 où $B_{TX}$ est la bande du signal d'émission et $B_{RX}$ est la bande du signal de réception.

2. Emetteur/récepteur selon la revendication 1, **caractérisé en ce que** le module de transposition de fréquence comprend une première branche, dite branche en phase et une seconde branche, dite branche en quadrature, arrangées en parallèle entre la première entrée/sortie et la seconde entrée/sortie, la branche en phase comprenant un premier mélangeur bidirectionnel avec un premier signal d'oscillateur local à la fréquence ΔF, la branche en quadrature comprenant un filtre de Hilbert et un second mélangeur bidirectionnel avec un second signal d'oscillateur local à la fréquence ΔF, en avance de 90° par rapport au premier signal d'oscillateur local.

3. Emetteur/récepteur selon la revendication 2, **caractérisé en ce que** les premier et second signaux d'oscillateur local sont des signaux d'horloge carrée, les premier et second mélangeurs bidirectionnels étant chacun réalisés sous la forme d'un commutateur qui, alternativement, court-circuite et applique un déphasage de 180° entre ses bornes.

4. Emetteur/récepteur selon la revendication 2 ou 3, **caractérisé en ce qu'**il comprend un premier diviseur/combineur de puissance comprenant une première borne commune reliée à la première entrée/sortie pour recevoir un signal à diviser ou fournir un signal combiné, et deux bornes pour fournir chacune un signal divisé ou recevoir un signal à combiner, une première borne du premier diviseur/combineur de puissance étant reliée à la branche en phase et une seconde borne du premier diviseur/combineur de puissance étant reliée à la branche en quadrature.

5. Emetteur/récepteur selon l'une des revendications 2 à 4, **caractérisé en ce qu'**il comprend en outre un second diviseur/combineur de puissance comprenant une seconde borne commune reliée à la seconde entrée/sortie pour recevoir un signal à diviser ou fournir un signal combiné, et deux bornes pour fournir chacune un signal divisé ou recevoir un signal à combiner, une première borne du second diviseur/combineur de puissance étant reliée à la branche en phase et une seconde borne du second diviseur/combineur de puissance étant reliée à la branche en quadrature.

6. Emetteur/récepteur selon l'une des revendications 2 à 5, **caractérisé en ce que** le filtre de Hilbert est réalisé au moyen d'un coupleur hybride en quadrature.

7. Emetteur/récepteur selon l'une des revendications précédentes, **caractérisé en ce que** la seconde entrée/sortie du module de transposition de fréquence est reliée à une antenne d'émission/réception.

8. Emetteur/récepteur selon l'une des revendications 1-6, **caractérisé en ce que** le port d'entrée du duplexeur est relié à une première antenne élémentaire de réception (811,911) et que le port de sortie du duplexeur est relié à une première antenne élémentaire d'émission (812,912), ladite première antenne élémentaire d'émission et ladite première antenne élémentaire de réception étant disposées toutes deux sur une première face d'un substrat isolant (740).

9. Emetteur/récepteur selon la revendication 8, **caractérisé en ce qu'**il comprend en outre un second duplexeur ayant un port commun relié à la seconde entrée/sortie du module de transposition de fréquence, un port de sortie relié à une seconde antenne élémentaire en émission (851,951) et un port d'entrée relié à une seconde antenne élémentaire en réception (852,952), la seconde antenne élémentaire en émission et la seconde antenne élémentaire en réception étant disposées sur une seconde face du substrat, opposée à ladite première face.

10. Emetteur/récepteur selon la revendication 9, **caractérisé en ce qu'**il comprend un déphaseur pilotable (960) entre la seconde entrée/sortie du module de transposition de fréquence et le port commun du second duplexeur.

**Patentansprüche**

1. Sender/Empfänger, der ein und dasselbe Frequenzband zum gleichzeitigen Senden eines Sendesignals $\left(S_{TX}^{out}\right)$ und Empfangen eines Empfangssignals $\left(S_{RX}^{in}\right)$ verwendet, umfassend:

   einen Duplexer (210), umfassend einen Eingangsanschluss (211), der ein zu sendendes Signal $\left(S_{TX}^{in}\right)$ empfängt, einen Ausgangsanschluss (212), der ein empfangenes Signal $\left(S_{RX}^{out}\right)$ liefert, sowie einen gemeinsamen Anschluss (213);
   ein bidirektionales Frequenztranspositionsmodul (220), **dadurch gekennzeichnet, dass**:

   das Frequenztranspositionsmodul einen ersten Eingang/Ausgang (221) umfasst, der mit dem gemeinsamen Anschluss des Duplexers verbunden ist, sowie einen zweiten Eingang/Ausgang (222), der das Empfangssignal $\left(S_{RX}^{in}\right)$ empfängt und das Sendesignal $\left(S_{TX}^{out}\right)$ liefert, wobei das Frequenztranspositionsmodul dazu ausgelegt ist, das zu sendende Signal $\left(S_{TX}^{in}\right)$ um einen vorbestimmten Frequenzabstand $\Delta F$ zu transponieren, um das Sendesignal $\left(S_{TX}^{out}\right)$ zu erhalten, und das Empfangssignal $\left(S_{RX}^{in}\right)$ um den gleichen Frequenzabstand zu transponieren, um das empfangene Signal $\left(S_{RX}^{out}\right)$ zu erhalten, wobei das Frequenzband des zu sendenden Signals und das Frequenzband des empfangenen Signals somit um einen Frequenzabstand separiert sind, der das Doppelte des vorbestimmten Frequenzabstands ist, wobei der vorbestimmte Frequenzabstand $\Delta F$ derart gewählt ist, dass $\Delta F > (B_{TX}+B_{RX}) / 4$, wobei $B_{TX}$ das Band des Sendesignals ist, und $B_{RX}$ das Band des Empfangssignals ist.

2. Sender/Empfänger nach Anspruch 1, **dadurch gekennzeichnet, dass** das Frequenztranspositionsmodul einen ersten Zweig, genannt Phasenzweig, und einen zweiten Zweig, genannt Quadraturzweig, umfasst, die parallel zwischen dem ersten Eingang/Ausgang und dem zweiten Eingang/Ausgang angeordnet sind, wobei der Phasenzweig einen ersten bidirektionalen Mischer mit einem ersten Lokaloszillatorsignal mit der Frequenz $\Delta F$ umfasst, wobei der Quadraturzweig ein Hilbertfilter und einen zweiten bidirektionalen Mischer mit einem zweiten Lokaloszillatorsignal mit der Frequenz $\Delta F$ umfasst, das bezüglich des ersten Lokaloszillatorsignals um 90° voraus eilt.

3. Sender/Empfänger nach Anspruch 2, **dadurch gekennzeichnet, dass** das erste und das zweite Lokaloszillatorsignal Rechtecktaktsignale sind, wobei der erste und der zweite bidirektionale Mischer jeweils in Form eines Schalters realisiert sind, der alternativ zwischen seinen Anschlüssen einen Kurzschluss bewirkt und eine Phasenverschiebung von 180° anlegt.

4. Sender/Empfänger nach Anspruch 2 oder 3, **dadurch gekennzeichnet, dass** er einen ersten Leistungsteiler/kombinierer umfasst, umfassend einen ersten gemeinsamen Anschluss, der mit dem ersten Eingang/Ausgang verbunden ist, um ein zu teilendes Signal zu empfangen oder ein kombiniertes Signal zu liefern, und zwei Anschlüsse, um jeweils ein geteiltes Signal zu liefern oder ein zu kombinierendes Signal zu empfangen, wobei ein erster Anschluss des ersten Leistungsteilers/kombinierers mit dem Phasenzweig verbunden ist, und ein zweiter Anschluss des ersten Leistungsteilers/kombinierers mit dem Quadraturzweig verbunden ist.

5. Sender/Empfänger nach einem der Ansprüche 2 bis 4, **dadurch gekennzeichnet, dass** er ferner einen zweiten Leistungsteiler/kombinierer umfasst, umfassend einen zweiten gemeinsamen Anschluss, der mit dem zweiten Eingang/Ausgang verbunden ist, um ein zu teilendes Signal zu empfangen oder ein kombiniertes Signal zu liefern, und zwei Anschlüsse, um jeweils ein geteiltes Signal zu liefern oder ein zu kombinierendes Signal zu empfangen, wobei ein erster Anschluss des zweiten Leistungsteilers/kombinierers mit dem Phasenzweig verbunden ist, und ein zweiter Anschluss des zweiten Leistungsteilers/kombinierers mit dem Quadraturzweig verbunden ist.

6. Sender/Empfänger nach einem der Ansprüche 2 bis 5, **dadurch gekennzeichnet, dass** das Hilbertfilter mit Hilfe eines Quadraturhybridkopplers realisiert ist.

7. Sender/Empfänger nach einem der vorhergehenden Ansprüche, **dadurch gekennzeichnet, dass** der zweite Eingang/Ausgang des Frequenztranspositionsmoduls mit einer Sende-/Empfangsantenne verbunden ist.

8. Sender/Empfänger nach einem der Ansprüche 1 bis 6, **dadurch gekennzeichnet, dass** der Eingangsanschluss des Duplexers mit einer ersten elementaren Empfangsantenne (811, 911) verbunden ist, und dass der Ausgangsanschluss des Duplexers mit einer ersten elementaren Sendeantenne (812, 912) verbunden ist, wobei die erste elementare Sendeantenne und die erste elementare Empfangsantenne beide auf einer ersten Fläche eines isolierenden Substrats (740) angeordnet sind.

9. Sender/Empfänger nach Anspruch 8, **dadurch gekennzeichnet, dass** er ferner einen zweiten Duplexer umfasst, der einen gemeinsamen Anschluss hat, der mit dem zweiten Eingang/Ausgang des Frequenztranspositionsmoduls verbunden ist, einen Ausgangsanschluss, der mit einer zweiten elementaren Sendeantenne (851, 951) verbunden ist, und einen Eingangsanschluss, der mit einer zweiten elementaren Empfangsantenne (852, 952) verbunden ist, wobei die zweite elementare Sendeantenne und die zweite elementare Empfangsantenne auf einer zweiten Fläche des Substrats entgegengesetzt zur ersten Fläche angeordnet sind.

10. Sender/Empfänger nach Anspruch 9, **dadurch gekennzeichnet, dass** er einen steuerbaren Phasenschieber (960) zwischen dem zweiten Eingang/Ausgang des Frequenztranspositionsmoduls und dem gemeinsamen Anschluss des zweiten Duplexers umfasst.

**Claims**

1. Transceiver using a given frequency band to simultaneously transmit a transmit $(S_{TX}^{out})$ signal and to receive a receive signal $(S_{RX}^{in})$, **characterised in that** it comprises:

   a duplexer (210) comprising an input port (211) receiving a signal to be transmitted $(S_{TX}^{in})$, an output port (212) supplying a received signal $(S_{RX}^{out})$ as well as a common port (213); a bidirectional frequency transposition module (220) comprising a first input/output (221) connected to the common port of the duplexer as well as a second input/output (222) which receives the receive signal $(S_{RX}^{in})$ and which supplies said received signal $(S_{RX}^{out})$, said frequency transposition module being suitable for transposing, the signal to be transmitted $(S_{TX}^{in})$ by a predetermined frequency difference, $\Delta F$, in order to obtain the transmit signal $(S_{TX}^{out})$, and to transpose the receive signal $(S_{RX}^{in})$ by the same frequency difference, in order to obtain the received signal $(S_{RX}^{out})$, the frequency band of the signal to be transmitted and the frequency band of the received signal thus being separated by a frequency gap which is double said predetermined frequency difference, the predetermined frequency difference $\Delta F$ being chosen such that $\Delta F > (B_{TX} + B_{RX})/4$ where $B_{TX}$ is the transmit signal band and $B_{RX}$ is the receive signal band.

2. Transceiver according to claim 1, **characterised in that** the frequency transposition module comprises a first branch, known as the in-phase branch and a second branch, known as the quadrature branch, arranged in parallel between the first input/output and the second input/output, the in-phase branch comprising a first bidirectional mixer with a first local oscillator signal at frequency $\Delta F$, the quadrature branch comprising a Hilbert filter and a second bidirectional mixer with a second local oscillator signal at the frequency $\Delta F$, 90° in advance in relation to the first local oscillator signal.

3. Transceiver according to claim 2, **characterised in that** the first and second local oscillator signals are square clock signals, the first and second bidirectional mixers are each made in the form of a switch which in an alternating manner short-circuits and applies a phase shift of 180° degrees between its terminals.

4. Transceiver according to claim 2 or 3, **characterised in that** it comprises a first power splitter/combiner comprising a first common terminal connected to the first input/output to receive a signal to be split or to supply a combined signal, and two terminals to each supply a split signal or to receive a signal to be combined, a first terminal of the first power splitter/combiner being connected to the in-phase branch and a second terminal of the first power splitter/combiner being connected to the quadrature branch.

5. Transceiver according to one of claims 2 to 4, **characterised in that** it furthermore comprises a second power splitter/combiner comprising a second common terminal connected to the second input/output to receive a signal to be split or to supply a combined signal, and two terminals to each supply a split signal or to receive a signal to be combined, a first terminal of the second power splitter/combiner being connected to the in-phase branch and a second terminal of the second power splitter/combiner being connected to the quadrature branch.

6. Transceiver according to one of claims 2 to 5 **characterised in that** the Hilbert filter is made using a quadrature hybrid coupler.

7. Transceiver according to one of the preceding claims **characterised in that** the second input/output of the frequency transposition module is connected to a transceiver antenna.

8. Transceiver according to one of claims 1-6, **characterised in that** the input port of the duplexer is connected to a first elementary receive antenna (811, 911) and that the output port of the duplexer is connected to a first transmit elementary antenna (812, 912), said first elementary transmit antenna and said first elementary receive antenna both being arranged on a first face of an insulating substrate (740).

9. Transceiver according to claim 8 **characterised in that** it furthermore comprises a second duplexer having a common port connected to the second input/output of the frequency transposition module, an output port connected to a second elementary transmit antenna (851, 951) and an input port connected to a second elementary receive antenna (852, 952), the second elementary transmit antenna and the second elementary receive antenna being arranged on a second face of the substrate, opposite to said first face.

10. Transceiver according to claim 9, **characterised in that** it comprises a controllable phase shifter (960) between the second input/output of the frequency transposition module and the common port of the second duplexer.

**Fig. 1**

**Fig. 2**

Fig. 3A

Fig. 3B

**Fig. 4**

**Fig. 5**

**Fig. 6**

**Fig. 7A**

720

710

730   740   750

731

732

**Fig. 7B**

811  820

830

840  851

$+\Delta F$

$+\Delta F$

812

**Fig. 8**

852

911  920

930

960  940  951

$+\Delta F$

$\phi$

$+\Delta F$

912

**Fig. 9**

952

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150333847 A
- US 8036627 B
- US 20130271346 A

**Littérature non-brevet citée dans la description**

- **SABHARVAL et al.** In-Band Full-Duplex wireless : challenges and opportunities. *IEEE Journal on Selected Areas in Communications,* Septembre 2014, vol. 32 (9), 1637-1652

- **D. BHARADIA et al.** *Full Duplex Radios » publié dans Proc. of SIGCOMM'13,* Août 2013